# EUROPÄISCHE PATENTSCHRIFT

(11) **EP 2 139 776 B1**
(45) Veröffentlichungstag und Bekanntmachung des Hinweises auf die Patenterteilung: **29.07.2015**
(21) Anmeldenummer: 08749222.9
(22) Anmeldetag: 29.04.2008
(51) Int. Cl.: B65H 29/12, B65H 29/68, B65G 47/31, B65B 35/44, B65G 47/52

(54) **VORRICHTUNG UND VERFAHREN ZUM HANDHABEN VON FLACHEN GEGENSTÄNDEN, INSBESONDERE WINDELN**
DEVICE AND METHOD FOR HANDLING FLAT OBJECTS, IN PARTICULAR NAPPIES
DISPOSITIF ET PROCÉDÉ POUR LA MANIPULATION D'OBJETS PLATS, EN PARTICULIER DE COUCHES

(30) Priorität: 03.05.2007 DE 102007021146
(43) Veröffentlichungstag der Anmeldung: 06.01.2010
(73) Patentinhaber: Focke & Co. (GmbH & Co. KG), 27283 Verden (DE)
(72) Erfinder: FECHT, Heino, 26689 Apen (DE)
(74) Vertreter: Ellberg, Nils
(86) Internationale Anmeldenummer: PCT/EP2008/003465
(87) Internationale Veröffentlichungsnummer: WO 2008/135201

(56) Entgegenhaltungen:
- EP-A- 0 101 144
- WO-A-99/18019
- DE-A1- 3 224 329
- DE-A1- 19 523 752
- US-A- 4 325 475
- US-A- 5 611 418
- US-A- 5 897 291

## Beschreibung

Die Erfindung betrifft eine Vorrichtung bzw. ein Verfahren zum Handhaben von flachen bzw. flächigen Gegenständen, insbesondere von flach zusammengelegten Windeln, die aufeinander folgend einem Förderer mit Aufnahmen für je einen Gegenstand bzw. für je eine Windel zuführbar sind, insbesondere einem Fächerförderer mit radial abstehend an einem Endlosförderer angeordneten Trennstegen zur Bildung von Fächern für je einen Gegenstand, gemäß dem Oberbegriff der Ansprüche 1 bzw. 10.

Ein Fächerband ist als Transportmittel für Beutel bei der Bildung von Gruppen aus mehreren Beuteln beispielsweise aus der DE 195 23 752 bekannt. Das Fächerband kann aus einem endlosen Gurt bestehen, der um beispielsweise vier Umlenkwalzen läuft. An der Außenseite des Gurts sind radial abstehende Stege angeordnet zur Bildung der Fächer für die Aufnahme je eines Beutels. Im Bereich einer Sammelstation werden die Beutel unter Bildung von Gruppen auf einem Abförderer abgelegt.

Windeln werden als vorzugsweise gefaltete, flache Gebilde mit insbesondere etwa rechteckiger oder quadratischer Form verpackt. Jeweils eine Windelgruppe aus einer Anzahl von aneinander liegenden Windeln bildet den Inhalt einer (Beutel-)Verpackung.

Bekannt ist die Zusammenstellung von Windelgruppen mittels Fächerband beispielsweise aus der US 5 897 291 (Fig. 1). Die Windeln werden nacheinander dem Fächerband zugeführt und finden Aufnahme in zwischen Stegen des Fächerbandes gebildeten Zwischenräumen. Eine Anzahl von im Fächerband nebeneinander liegenden Windeln wird quer zur Ausrichtung des Fächerbandes durch einen Schieber ausgeschoben und als Windelgruppe auf einer Plattform abgesetzt. Diese ist aufwärts bewegbar und übergibt die Windelgruppe an einen oberhalb des Fächerbandes angeordneten Gruppenförderer, der die Windelgruppen nacheinander zu einer Verpackungsmaschine transportiert. Diese bekannte Vorrichtung ist hinsichtlich der Leistungsfähigkeit begrenzt.

Eine weitere Vorrichtung der eingangs genannten Art ist aus der US 5,611,418 bekannt. Dort werden Gegenstände auf einen Zuförderer in Richtung eines Fächerbands transportiert und finden dort Aufnahme in zwischen den Stegen des Fächerbands gebildeten Fächern. Es wird auch vorgeschlagen, dass die Geschwindigkeit des Fächerbands höher oder geringer sein kann als die Geschwindigkeit des Zuförderers.

Der Erfindung liegt die Aufgabe zugrunde, ein Verfahren bzw. eine Vorrichtung zur Handhabung von flachen Gegenständen, insbesondere von Windeln, weiterzuentwickeln, insbesondere im Hinblick auf eine höhere Leistungsfähigkeit.

Zur Lösung dieser Aufgabe weist ein erfindungsgemäßes Verfahren die Merkmale des Anspruchs 1 auf.

Diese Lösung weist insbesondere den Vorteil auf, dass die Gegenstände (Windeln) vor der Übergabe an den Förderer (Fächerband) abgebremst werden. Auf diese Weise kann die Übergabe und insbesondere der quergerichtete Abtransport der Gegenstände auf dem Förderer schonender erfolgen. Dadurch ist es möglich, die Leistung der Vorrichtung zu insgesamt zu erhöhen, ohne dass dies zu Beschädigungen der Gegenstände bei der Übergabe an den Förderer führt.

*Fortsetzung der neuen Beschreibungseinleitung durch die ursprünglich eingereichte Beschreibung gemäß* WO 2008/135201 *ab Seite* 2, *Zeile 16, beginnend mit:* "Gemäß einer bevorzugten Weiterbildung der Erfindung ist vorgesehen, dass die Gegenstände über mehrere hintereinander angeordnete Zuförderer transportiert werden, wobei die Zuförderer die Gegenstände wenigstens teilweise ...." *bis zum Ende der ursprünglich eingereichten Beschreibung.*

Gemäß einer bevorzugten Weiterbildung der Erfindung ist vorgesehen, dass die Gegenstände über mehrere hintereinander angeordnete Zuförderer transportiert werden, wobei die Zuförderer die Gegenstände wenigstens teilweise mit unterschiedlichen Geschwindigkeiten transportieren, derart, dass die Geschwindigkeit der Zuförderer wenigstens teilweise in Richtung des Förderers abnimmt. In einer bevorzugten Ausgestaltung ist vorgesehen, dass wenigstens der letzte Zuförderer vor der Übergabe der Gegenstände an den Förderer mit einer geringeren Geschwindigkeit als wenigstens einige der davor angeordneten Zuförderer betrieben wird.

In einer bevorzugten Ausführungsform der Erfindung ist vorgesehen, dass fehlerhafte Produkte im Bereich der Zuförderer ausgeschleust werden und dass der teilweise größere Abstand zwischen den Gegenständen der durch das Ausschleusen bedingt ist durch beschleunigten Antrieb eines oder mehrerer Zuförderer ausgeglichen wird. Auf diese Weise ist es möglich die durch das Ausschleusen entstandene Lücke einfach zu kompensieren, um das Fehlen einzelner Gegenstände in der Verpackung zu vermeiden.

In einer bevorzugten Ausführungsform der Erfindung ist vorgesehen die Gegenstände auf den Zuförderern mit einem Abstand zueinander transportiert werden. Dieser Abstand ist erforderlich, um die Gegenstände in die Fächer des Förderers einschleusen zu können. Vorzugsweise werden die Abstände der aufeinander folgenden Gegenstände im Bereich der Zuförderer mittels Sensoren, insbesondere Lichtschranken, erfasst und fehlerhafte Abstände gegebenenfalls durch beschleunigten oder verlangsamten Antrieb eines oder mehrerer Zuförderer ausgeglichen. Auf diese Weise kann auch eine durch das Ausschleusen eines fehlerhaften Gegenstands entstandene Lücke kompensiert werden.

Eine weitere Besonderheit besteht darin, dass die Abstände der aufeinander folgenden Gegenstände in Abhängigkeit von der Produktgröße angepasst werden können, insbesondere derart, dass die Abstände der aufeinander folgenden Gegenstände im Bereich des letzten Zuförderers vor der Übergabe an den Förderer verringert wird. Auf diese Weise kann der Umstand berücksichtigt werden, dass die Einschleusezeit in das Fächerband bei kleineren Produkten kürzer ist.

Gemäß einer bevorzugten Weiterbildung der Erfindung, bei der es sich aber auch um eine eigenständige Lösung der eingangs gestellten Aufgabe handeln kann, ist gemäß Anspruch 5 vorgesehen, dass für unterschiedliche Gegenstände und/oder Gegenstände unterschiedlicher Größe jeweils Parameter zur Steuerung der Vorrichtung in einer Steuerungseinheit hinterlegt sind, insbesondere die Geschwindigkeit der Zuförderer und/oder die Verteilung der Transportgeschwindigkeit auf den Zuförderern und/oder die maximal zulässigen Beschleunigungswerte der Gegenstände und/oder Geschwindigkeitsdifferenzen zwischen den Zuförderern und/oder der Abstand, wobei die Steuerungseinheit den Transport der Gegenstände auf den Zuförderern nach Maßgabe der hinterlegten Parameter steuert. Es wird vorzugsweise eine Datenbank bereit gestellt, in der für verschiedene Gegenstände jeweils optimierte Parameter gespeichert sind. Vorzugsweise ist wenigstens für jeden Gegenstand und für jeden Zuförderer jeweils eine geeignete Geschwindigkeit hinterlegt, sodass die erforderlichen Anpassungen der Transportgeschwindigkeit über die Transportstrecke entlang der Zuförderer individuell geregelt werden kann.

Ein weiterer Gedanke der Erfindung besteht darin, dass die Transportgeschwindigkeit der Gegenstände auf vorzugsweise wenigstens dem letzten Zuförderer vor der Übergabe der Gegenstände an den Fächerförderer in Abhängigkeit von der Produktgröße, insbesondere der Länge des Gegenstandes in Transportrichtung, den Abmessungen eines Faches zwischen benachbarten Trennstegen des Fächerförderers und der Fördergeschwindigkeit des Fächerförderers geregelt wird, derart, dass größere Gegenstände mit einer höheren Transportgeschwindigkeit und kleinere Gegenstände mit einer geringeren Transportgeschwindigkeit transportiert werden, um so eine möglichst schonende Übergabe der Gegenstände an das Fächerband bei hoher Leistungsfähigkeit der gesamten Vorrichtung zu erreichen.

Gemäß einer bevorzugten Weiterbildung der Erfindung ist vorgesehen, der Abstand zwischen zwei aufeinanderfolgenden Gegenständen derart gesteuert wird, dass der Abstand gerade ausreichend ist, damit ein Trennsteg des Fächerförderers nach der Einschleusung eines Gegenstands und vor Einschleusung des nächsten Gegenstands zwischen den beiden Gegenständen hindurchbewegt wird. Weiterhin kann vorgesehen sein, dass die Einschleusung eines Gegenstands in ein Fach des Fächerförderers beginnt, sobald ein vorauslaufendes Ende des Gegenstands eine gedachten virtuellen Hüllkurve berührt, die durch freie Ende der Trennstege des Fächerförderers im Bereich der Füllstation beschrieben wird und dass die das Einschleusen des Gegenstands in das Fach des Fächerförderers endet, sobald ein stromabwärtiges Ende des Gegenstands die gedachte virtuelle Hüllkurve durchlaufen hat. Auf diese Weise kann der Einschleusevorgang optimal verkürzt werden.

Weitere Maßnahmen zur möglichst schonenden Behandlung der Gegenstände bestehen darin, dass die Geschwindigkeitsdifferenz zwischen benachbarten Zuförderern derart gewählt wird, dass die Gegenstände bei der Übergabe zwischen den Zuförderern nicht beschädigt wird, wobei die Geschwindigkeitsdifferenz zwischen benachbarten Zuförderern umso größer ist je kleiner die Gegenstände sind und umso kleiner ist je größer die Gegenstände sind.

Eine Vorrichtung zur Lösung der eingangs genannten Aufgabe weist die Merkmale des Anspruchs 11 auf.

Gemäß einer bevorzugten Weiterbildung der Erfindung ist vorgesehen, dass der letzte Zuförderer, insbesondere ein Twistband, vor der Übergabe der Gegenstände an den Förderer mehrere, insbesondere zwei, Lichtschranken aufweist zur Erfassung der Abstände der Gegenstände in diesem Bereich. Auf diese Weise ist eine genauere Erfassung der Abstände der Gegenstände in diesem kritischen Bereich möglich und gegebenenfalls ein gezielter Eingriff zur Anpassung der Abstände.

Weitere Einzelheiten und vorteilhafte Ausgestaltungen der Erfindung sind in den Unteransprüchen, der Zeichnung und der Beschreibung im Übrigen enthalten.

Nachfolgend wird ein bevorzugtes Ausführungsbeispiel der Erfindung anhand der Zeichnung erläutert. In dieser zeigen:
- Fig. 1: eine Vorrichtung zum Handhaben von Gegenständen, insbesondere Windeln, in schematischem Grundriss,
- Fig. 2: die Vorrichtung gemäß Fig. 1 in Seitenansicht entsprechend Pfeil II in Fig. 1 bei Herstellung eines kürzeren Gegenstands,
- Fig. 3: die Vorrichtung gemäß Fig. 1 in Seitenansicht entsprechend Pfeil III in Fig. 1 bei Herstellung eines längeren Gegenstands,
- Fig. 4: einen Ausschnitt IV der Vorrichtung gemäß Fig. 1 bei der Übergabe kürzerer Gegenstände an einen Förderer in unterschiedlichen Phasen,
- Fig. 5: einen Ausschnitt V der Vorrichtung gemäß Fig. 1 bei der Übergabe längerer Gegenstände an einen Förderer in unterschiedlichen Phasen,
- Fig. 6: die Steuerung der Vorrichtung gemäß Fig. 1 in schematischer Darstellung,
- Fig. 7: eine Datenbank mit Informationen zur Steuerung der Vorrichtung gemäß Fig. 1 in schematischer Darstellung, und
- Fig. 8 bis Fig. 10: die Übergabe von Gegenständen an einen Fächerförderer mit einer zusätzlichen Möglichkeit zur Kompensation von unregelmäßigen Abständen zwischen den Gegenständen.

Die Ausführungsbeispiele in den Zeichnungen befassen sich mit der Handhabung von Windeln 10. Es handelt sich dabei um verhältnismäßig flache, annähernd rechteckige Gebilde, die durch Faltung entstehen unter Bildung von zwei gleich großen Schenkeln. Eine gerundete Faltkante 11 ist überwiegend in Förderrichtung nach vorn weisend angeordnet. Anstelle von Windeln 10 können in gleicher Weise flache Gegenstände ähnlicher Form und Größe verarbeitet werden, insbesondere Bücher, Zeitschriften, (Beutel-)Packungen etc.

Die einzeln von einer Herstellmaschine 15 (Konvektor) oder von einem Vorrat zugeführten Windeln 10 sollen zu Gruppen, also Windelgruppen, zusammengestellt werden. Jede Windelgruppe entspricht dem Inhalt einer herzustellenden Packung. Die Windelgruppen werden demnach einer oder mehreren Verpackungsmaschinen 16 zugeführt. Die vorliegende Einheit, die insgesamt als Gruppiereinrichtung 12 bezeichnet ist, bildet eine Handhabungsstation zwischen der Herstellmaschine 15 und dem Packer 16.

Die Gruppiereinrichtung 12 schließt an Zuförderer 13, 14 an, die einzelne Windeln 10 in Längsrichtung hintereinander von der Herstellmaschine 15 zuführt. Im Grundaufbau besteht die Gruppiereinrichtung 12 aus mindestens einem Fächerförderer 17 im Anschluss an den Zuförderer 14. Jede Windelgruppe besteht aus aufrecht eng aneinander liegenden Windeln 10. Die Windeln 10 werden mit Abstand S voneinander zugeführt.

Der Fächerförderer 17 besteht aus einem Endlosförderer bzw. einem Fächergurt 21, an dessen Außenseite Fächer 23 bildende Trennorgane, nämlich Trennstege 22, angebracht sind. Diese sind unter einem spitzen Winkel zur Ebene des Fächergurts 21 gerichtet, und stehen radial von diesem ab. Es entstehen so im Bereich geradliniger Förderabschnitte schmale Aufnahmen für je eine Windel 10, nämlich Fächer 23. Die Trennstege 22 sind in fester Relativstellung am Fächergurt 21 angebracht. Im Bereich einer Verformung des Fächergurts 21, insbesondere im Bereich einer Umlenkung 24, werden die Trennstege 22 gespreizt, sodass die Fächer 23 in diesem Bereich einen nach außen, zur freien Seite divergierenden, keilförmigen Querschnitt bilden.

Die Gegenstände bzw. Windeln 10 werden im Bereich der Umlenkung 24 des Fächerförderers 17 in die Fächer 23 durch den Zuförderer 14 eingeführt, nämlich in einer Füllstation 25. Der Fächerförderer 17 ist in horizontaler Ebene umlaufend über mehrere Umlenkrollen 26 geführt. Der Fächerförderer 17 läuft dabei im vorliegenden Fall über vier Umlenkrollen 26 unter Bildung einer rechteckigen Formation. Die Windeln 10 werden im Bereich der als Antriebsrolle ausgebildeten ersten Umlenkrolle 26 in die Fächer 23 eingeführt. Es folgt ein erster Förderabschnitt 27 und im Anschluss an die zweite Umlenkrolle 26 ein zweiter Förderabschnitt 27. Nach weiterer Umlenkung folgt ein dritter Förderabschnitt 27 worauf nach einer weiteren Umlenkung der Fächerförderer 17 einen Leerabschnitt 28 bildet.

Im Anschluss an die Füllstation 25 ist jedes Fach 23 mit einem Gegenstand bzw. einer Windel 10 belegt. Es folgt eine erste Sammelstation 29, in der eine erste Gruppe von Windeln 10 dem Fächerförderer 17 entnommen wird. Diese Sammelstation 29 befindet sich im Bereich des zweiten Förderabschnitts 27. Eine zweite Sammelstation 29 ist dem nachfolgenden dritten Förderabschnitt 27 zugeordnet. Hier wird eine zweite Gruppe der Windeln 10 entnommen unter vollständiger Leerung des Fächerförderers 17.

Jeder Sammelstation 29 ist ein Entnahme- bzw. Ausschiebeorgan 30 zugeordnet, welches so ausgebildet ist, dass nur die zur Bildung der Gruppe benötigte Anzahl von Windeln 10 ausgeschoben wird. Die (in der Sammelstation 29) nachfolgenden Windeln 10 werden durch die erste Sammelstation 29 hindurchtransportiert zur zweiten Sammelstation 29.

Die Zuförderer 13, 14 für den Transport der Windeln 10 zum Gruppieraggregat sind als Gurtförderer bzw. als Endlosgurte ausgebildet und so angeordnet, dass jeweils zwei einander zugeordnete Gurte die Windeln 10 zwischen benachbarten Fördertrumen transportieren.

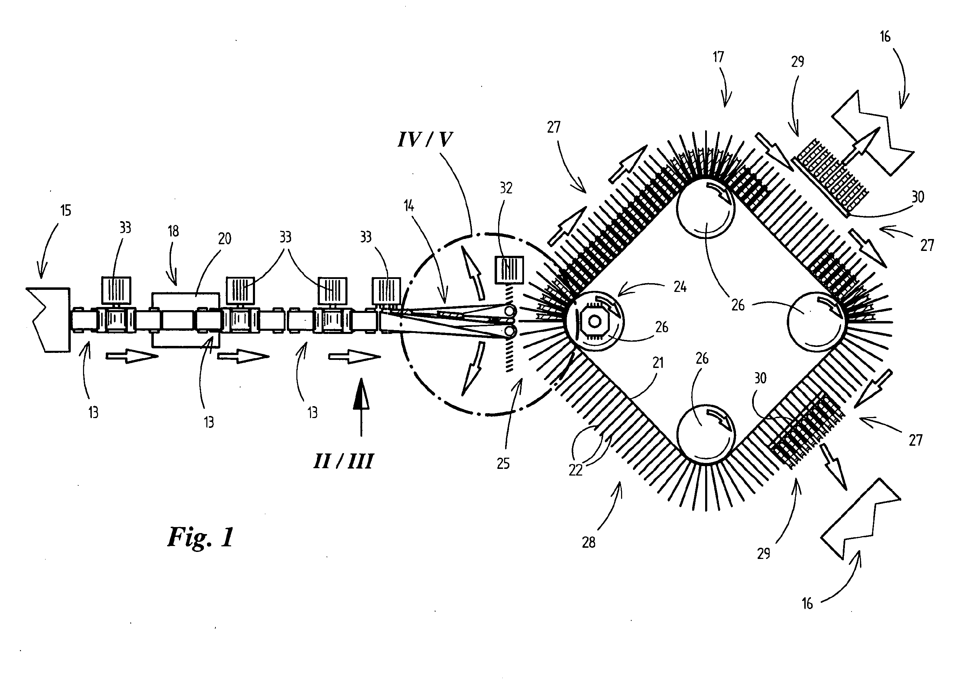

Bei dem Ausführungsbeispiel gemäß Fig. 1 werden die Windeln 10 durch den Zuförderer 14 dem Fächerförderer 17 zugeführt. Dieser endet unmittelbar im Bereich des Gruppieraggregats nämlich am quergerichteten Fächerförderer 17. Der Zuförderer 14 ist dabei als Wendeförderer bzw. als Twistgurt ausgebildet. Umlenkwalzen 31 des Zuförderers 14 sind mit um 90° versetzten Drehachsen versehen. Die ankommenden Windeln 10 werden in horizontaler Ebene übernommen und während des Transports durch den Zuförderer 14 um 90° gewendet in eine aufrechte Stellung.

Als weitere Besonderheit ist der Twistgurt (Zuförderer 14) durch einen Antrieb 32 in horizontaler Ebene schwenkbar, um der Förderbewegung der Trennstege 22 bzw. der Fächer 23 für eine störungsfreie Übergabe der Windeln 10 auch bei ungleichförmigen Abständen Sₓ bei deren Zuführung zu folgen. Der Antrieb 32 für die Schwenkbewegungen des Zuförderers 14 ist eine durch einen Servomotor angetriebene Spindel. Die Bewegung des Zuförderers 14 ist in Abhängigkeit von der Zuführung der Windeln 10 auf die Bewegungen der Umlenkrolle 24 des Fächerförderers 17 abgestimmt.

Zwischen den Zuförderern 13 und dem Twistgurt (Zuförderer 14) ist weiterhin eine Auswurfstation 18 für Windeln 10 gebildet. Ein verstellbares Führungsorgan 19 kann einzelne Windeln 10, insbesondere fehlerhafte Produkte, bei entsprechender Position nach unten ableiten in einen Auffangbehälter 20.

Eine Besonderheit der geschilderten Vorrichtung besteht darin, dass die Transportgeschwindigkeit v der Windeln 10 für die Übergabe an den Fächerförderer 17 verringert wird.

Derzeit aus der Praxis bekannte Herstellmaschinen 15 sind in der Lage etwa 1000 Windeln in der Minute zu produzieren, die mit einem Abstand S von 550 mm auf den Zuförderern 13, 14 transportiert werden. Hieraus ergibt sich eine Transportgeschwindigkeit v₁ von 550 m/min. Im anschließenden Fächerförderer 17 werden die Windeln 10 quer abtransportiert. Dies hat zur Folge, dass die ursprüngliche Transportgeschwindigkeit v der Windeln 10 in Längsrichtung der Zuförderer 13, 14 auf Null abgebremst wird. Dabei wirken erhebliche Kräfte auf die Windeln 10 ein, die zum Verrutschen des Granulats in den Windeln 10 und zur Beschädigung der Produkte führen können.

Mit Hilfe der Reduzierung der Transportgeschwindigkeit v der Windeln 10 während des Transports auf den Zuförderern 13, 14 ist es möglich, die Geschwindigkeit v der Windeln 10 schonend zu verringern, um Beschädigungen zu vermeiden bzw. um eine Erhöhung der Arbeitsgeschwindigkeit der Vorrichtung zu ermöglichen. Auf diese Weise wird es zukünftig auch möglich sein Herstellmaschinen 15 mit einer höheren Leistung einzusetzen, beispielsweise von 1400 Windeln in der Minute. Unter normalen Umständen würde sich durch die damit einhergehende höhere Transportgeschwindigkeit v die zu absorbierende Energie bei der Einführung der Windeln 10 in den Fächerförderer 17 verdoppeln. Mit Hilfe der Verringerung der Transportgeschwindigkeit v kann dies jedoch wenigstens teilweise kompensiert werden.

Wie aus Fig. 1 bis 3 ersichtlich, sind im vorliegenden Fall mehrere Zuförderer 13, 14 aufeinander folgend angeordnet. Die Transportgeschwindigkeit v der Windeln 10 wird dabei wenigstens im letzten Zuförderer 14 vor der Übergabe der Windeln 10 an den Fächerförderer 17 reduziert. Bei dem letzten Zuförderer 14 handelt es sich im vorliegenden Fall um ein Twistband. Es kann sich aber auch um einen weiteren "normalen" Zuförderer 13 handeln.

Die Reduzierung der Transportgeschwindigkeit v der Windeln 10 erfolgt dadurch, dass der letzte Zuförderer 14 mit einer geringeren Geschwindigkeit v angetrieben wird, als die vor diesem angeordneten Zuförderer 13. Zu diesem Zweck sind die Gurte jedes Zuförderers 13, 14 durch regelbare Antriebe 33 steuerbar. Bei diesen Antrieben 33 handelt es sich vorzugsweise um Servomotoren. Jeder Zuförderer 13, 14 weist zwei Antriebe 33 für je einen Gurt auf, die synchron ansteuerbar sind. Die Ansteuerung erfolgt mit Hilfe einer Steuerung, beispielsweise einer SPS. Die Steuerung kann mit einer elektronischen Steuerungseinheit 34 verwirklicht werden, die jeweils über Signalleitungen 35 mit den Antrieben 33 verbunden ist.

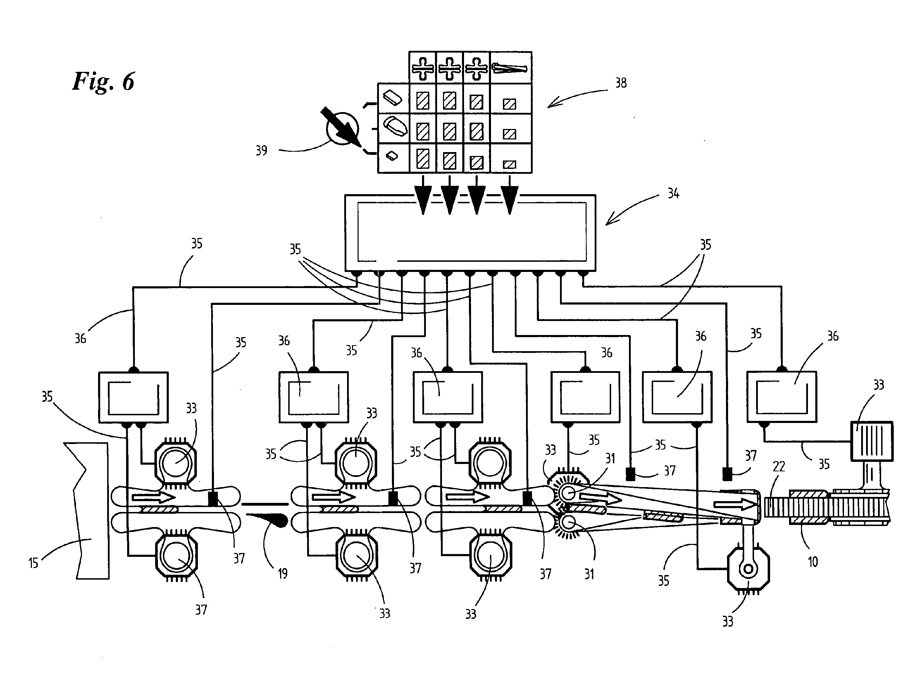

Die Geschwindigkeit der Antriebe 33 kann wie in Fig. 6 gezeigt dadurch geregelt werden, dass über die Signalleitungen 35 die Stromversorgung 36 für jedes Paar der Antriebe 33 geregelt wird. Zur Kontrolle ist jedem Zuförderer 13, 14 eine Lichtschranke 37 zugeordnet, mit deren Hilfe die Abstände Sₓ zwischen den Windeln 10 in diesen Bereichen erfassbar sind. Auch die Lichtschranken 37 sind über Signalleitungen 35 mit der Steuerungseinheit 34 verbunden.

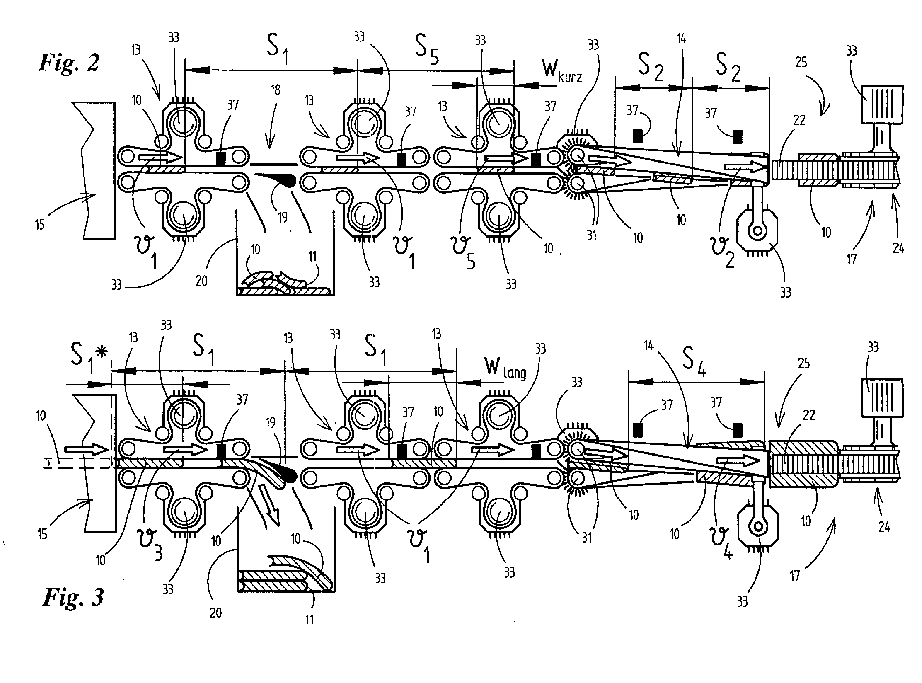

Die soweit beschriebene Vorrichtung arbeitet wie in Fig. 2 gezeigt vereinfacht wie folgt: Die Windeln 10 werden vom Konverter (Herstellmaschine 15) kommend an den ersten Zuförderer 13 übergeben und dort mit einer Geschwindigkeit v₁ in Richtung des Fächerförderers 17 transportiert. Dabei weisen die Windeln 10 einen Abstand S₁ auf. Die Einhaltung des Abstandes S₁ wird mit Hilfe der Lichtschranken 37 kontrolliert. Wenigstens auf dem Twistband (Zuförderer 14) wird die Geschwindigkeit der Windeln 10 auf v₂ reduziert. Dies erfolgt dadurch, dass das Twistband mit einer geringeren Geschwindigkeit als die Zuförderer 13 angetrieben wird. Die Geschwindigkeit ist in der Steuerungseinheit 34 hinterlegt. Durch die unterschiedliche Geschwindigkeit der Zuförderer 13, 14 werden die Windeln 10 bei der Übergabe geringfügig aufgestaut, sodass sich der Abstand der Windeln auf S₂ verringert. Mit diesem Abstand S₂ und einer Geschwindigkeit v₂ werden die Windeln dann in ein Fach 23 zwischen den Trennstegen 22 des Fächerförderers 17 eingeführt.

Da die beiden Zuförderer 13, 14 mit unterschiedlichen Geschwindigkeiten angetrieben werden, führt dies zu einer Belastung der Windeln 10 bei der Übergabe. Im vorliegenden Fall führt die Geschwindigkeitsdifferenz zwischen dem Zuförderer 13 und dem langsameren Zuförderer 14 dazu, dass die Windeln 10 für kurze Zeit während der Übergabe geknautscht werden. In der Steuerungseinheit 34 können aus diesem Grund neben anderen Parametern auch maximale Geschwindigkeitsdifferenzen zwischen den Förderern 13, 14 vorgegeben werden, damit die Belastung für die Windeln 10 bei der Übergabe zwischen den Förderern 13, 14 nicht zu groß wird und es zu einer Beschädigung oder sogar Zerstörung der Windeln 10 kommt.

Zudem werden für unterschiedliche Windeln 10 unterschiedliche maximale Geschwindigkeitsdifferenzen in der Steuerungseinheit 34 hinterlegt. Es wurde erkannt, dass beispielsweise bei kürzeren Windeln 10 die Geschwindigkeitsdifferenzen größer sein können, da diese eine kürzere Übergabezeit benötigen.

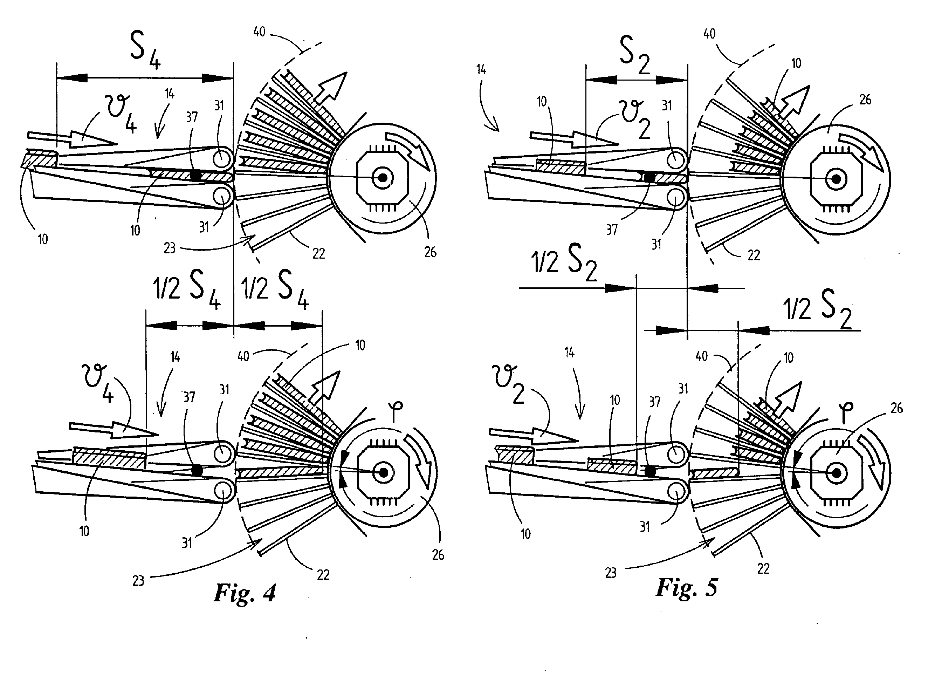

Der Winkel zwischen den schrägen Trennstegen 22 des Fächerförderers 17 im Bereich der Umlenkung 24 beträgt annähernd 2*ϕ (Fig. 4 und 5). Die Zeit die zum Einschleusen der Windel 10 in ein Fach 23 des kontinuierlich umlaufenden Fächerförderers 17 zur Verfügung steht ergibt sich aus dem Winkel ϕ, der Länge Wₓ der Windel 10 und der Transportgeschwindigkeit vₓ im Verhältnis zur Geschwindigkeit des Fächerförderers 17, die als konstant angenommen wird. Nur im Bereich des Winkels ϕ ist ein Einführen der Windeln 10 in ein Fach 23 möglich, da dann die Trennstege 22 einen Mündungsbereich des Fachs 23 frei geben.

Fig. 2 und 5 zeigen die Funktionsweise der Vorrichtung für eine kurze Windel 10 mit einer Länge W_{kurz}. Fig. 3 und 4 zeigen die gleiche Lösung für eine lange Windel 10 mit einer Länge W_{lang}. Dort wird die Windel 10 zunächst mit einem Abstand S₁ und einer Geschwindigkeit v₃ transportiert und später mit einem Abstand S₄ und einer Geschwindigkeit v₄ an den Fächerförderer 17 übergeben.

Vorzugsweise wird die Transportgeschwindigkeit v der Windeln 10 nicht nur im Bereich des letzten Zuförderers 14 (Twistband) reduziert, sondern schon auf den vorhergehenden Zuförderern 13. Dies ist auch bereits in Fig. 2 und 3 dargestellt, wobei die Windeln 10 in Fig. 2 auf dem dritten Zuförderer 13 mit einer Geschwindigkeit v₅ transportiert werden, die geringer als die Geschwindigkeit v₁ ist, aber noch größer als die Geschwindigkeit v₂ ist.

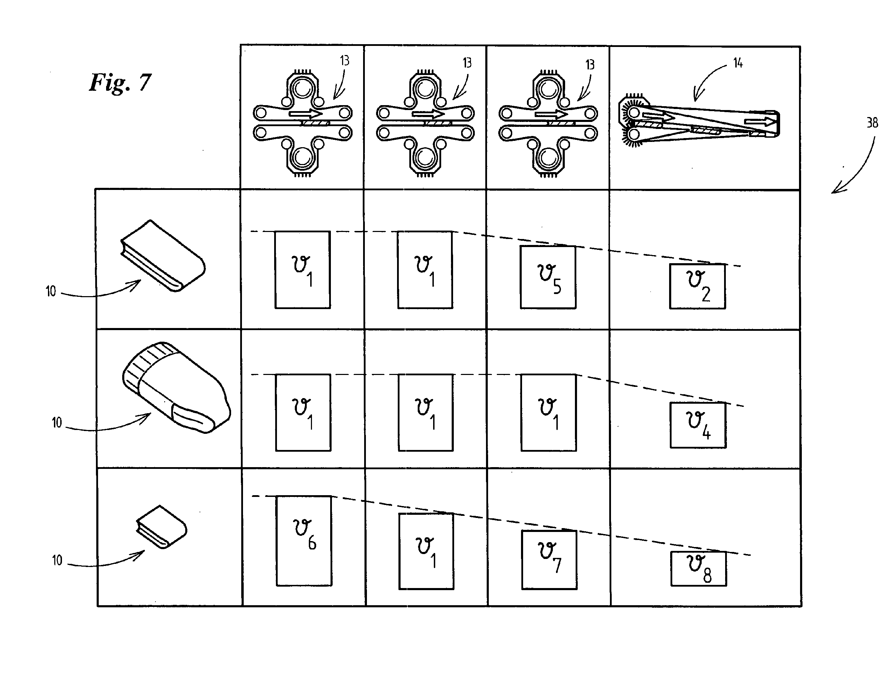

Im Unterschied hierzu wird bei der Lösung gemäß Fig. 3 die Geschwindigkeit v der Windeln 10 im Normalfall erst auf dem Zuförderer 14 auf v₄ reduziert (Fig. 7). Fig. 3 zeigt zusätzlich das Schließen einer Lücke im Förderstrom der Windeln 10, wobei lediglich der erste Zuförderer 13 mit einer höheren Geschwindigkeit v₃ angetrieben wird.

Im Normalfall ist die Geschwindigkeit v der Windeln 10 während des Transports auf einem Zuförderer 13, 14 stets konstant, solange die Abstände Sₓ zwischen aufeinander folgenden Windeln 10 korrekt sind. Denkbar ist jedoch auch, dass die Geschwindigkeit variiert werden kann, um Abstände zwischen aufeinanderfolgenden Windeln 10 anzupassen. Diese Methode eignet sich vorzugsweise, wenn auf jedem Förderer 13, 14 zur Zeit jeweils nur eine Windel 10 befördert wird.

Eine weitere Besonderheit besteht hinsichtlich der Übergabe der Windeln 10 an die Fächer 23 zwischen den Trennstegen 22 des Fächerförderers 17 in der Füllstation 25. Diese Besonderheit ist auch in den Fig. 4 und 5 gezeigt.

Durch die freien Enden der Trennstege 22 wird eine gedachte Hüllkurve 40 beschrieben, die in Fig. 4 und 5 durch gestrichelte Linie dargestellt ist. Das Einschleusen der Windeln 10 in die Fächer 23 beginnt, wenn der Anfang, nämlich die vorne liegende Faltkante 11 der Windel 10 die Hüllkurve 40 berührt und der in Förderrichtung vorauslaufende Trennsteg 22 die Öffnung zwischen den beiden Fördertrumen des Zuförderer 14 freigibt. Dieser Zeitpunkt ist in Fig. 4 und 5 jeweils im oberen Teil dargestellt. Im Unterschied hierzu zeigt der untere Teil der Fig. 4 und 5 jeweils das Ende des Einschleusens der Windeln 10. Dieser Zeitpunkt ist erreicht, wenn das hinten liegende Ende der jeweiligen Windel 10 gerade die Hüllkurve 40 durchlaufen hat und der nächste Trennsteg 22 gerade in die Öffnung zwischen den beiden Fördertrumen des Zuförderers 14 einläuft.

Eine weitere Besonderheit besteht darin, dass der Abstand S zwischen aufeinander folgenden Windeln 10 genauso groß ist, dass bei konstanter Transportgeschwindigkeit v der Windeln 10 der Fächerförderer 17 exakt im Fach 23 weiterbewegt wurde und die nächste Windel 10 die Einschleuseposition gemäß der Darstellung im oberen Teil der Fig. 4 und 5 erreicht hat. Dies kann durch die Vorgabe entsprechender Transportgeschwindigkeiten und/oder Geschwindigkeitsdifferenzen zwischen den Zuförderern 13, 14 erreicht werden.

Um die Verringerung der Geschwindigkeit v der Windeln 10 auf den Zuförderern 13, 14 möglichst komfortabel regeln zu können, besteht eine weitere Besonderheit darin, dass für unterschiedliche Produkte jeweils Transportgeschwindigkeiten vₓ in einer Datenbank 38 hinterlegt werden können.

Die Steuerungseinheit 34 greift auf die in der Datenbank 38 für jedes Produkt und jeden Zuförderer 13, 14 hinterlegten Transportgeschwindigkeiten vₓ zurück und steuert über die Signalleitungen 35 die Stromversorgung 36 für die Zuförderer 13, 14 derart, dass diese mit der in der Datenbank 38 hinterlegten Transportgeschwindigkeiten vₓ angetrieben werden.

In der Datenbank 38 sind gemäß Fig. 7 Transportgeschwindigkeiten vₓ für drei Produkte in einer Tabelle hinterlegt, nämlich in Zeilen jeweils von oben nach unten für mittelere Windeln 10, lange Windeln 10 und kurze Windeln 10. Jedem Produkt kann über die Spalten jeweils eine Transportgeschwindigkeit v auf dem ersten Zuförderer 13, dem zweiten Zuförderer 13, dem dritten Zuförderer 13 und dem vierten Zuförderer 14 (Twistband) entnommen werden.

In einer bevorzugten Ausgestaltung der Efindung ist in der Datenbank 38 ein kompletter Parametersatz für die Steuerungseinheit 34 hinterlegt. Der Parametersatz enthält vorzugsweise für jeden Typ Windel 10 die entsprechenden Geschwindigkeiten vₓ und/oder die Geschwindigkeitsverteilung und/oder die maximalen Beschleunigungswerte und/oder die Geschwindigkeitsdifferenzen und/oder die Abstände Sₓ in den jeweiligen Zuförderern 13, 14 die über die Steuerungseinheit 34 gesteuert werden. Die Auswahl dieser Parameter obliegt dem Anwender und kann insbesondere an die örtlichen Gegebenheiten, das Produkt und die individuellen Bedürfnisse angepasst werden. Es ist denkbar, dass mehr Parameter angegeben werden als eigentlich erforderlich, damit die Steuerung innerhalb der vorgegebenen Randbedingungen die Anlage entsprechend steuert.

Der schematischen Darstellung in der Datenbank 38 ist zu entnehmen, dass die Transportgeschwindigkeit v der Windeln 10 in Richtung des Fächerförderers 17 schrittweise abnimmt. Sofern die Abstände Sₓ zwischen den Windeln 10 korrekt sind, werden die Zuförderer 13 mit einer konstanten Geschwindigkeit angetrieben. Denkbar ist jedoch auch, dass die Geschwindigkeit v der Windeln 10 auf den Zuförderern 13, 14 konstant reduziert wird, indem die Antriebsgeschwindigkeit der Zuförderer 13, 14 jeweils nach Übernahme einer Windel 10 kontinuierlich verringert wird. Nach Übergabe der Windel 10 an den folgenden Zuförderer 13, 14 müsste die Antriebsgeschwindigkeit dann wieder erhöht werden, um die nächste Windel 10 aufzunehmen.

Zudem ist zu entnehmen, dass die Transportgeschwindigkeit v der langen Windeln 10 erst im letzten Zuförderer 14 reduziert wird, wohingegen die Transportgeschwindigkeit v der mittleren Windeln 10 bereits sukzessive ab dem dritten Zuförderer 13 und die Transportgeschwindigkeit v der kurzen Windeln 10 bereits sukzessive ab dem zweiten Zuförderer 13 reduziert wird.

Weiterhin ist zu entnehmen, dass die Geschwindigkeit v, die die Windeln 10 bei der Übergabe an den Fächerförderer 17 aufweisen, umso größer ist, je länger die Windeln 10 sind. Dies ergibt sich aus der Tatsache, dass eine längere Windel 10 mehr Zeit benötigt, um in ein Fach 23 einzulaufen als eine kürzere Windel 10. Dies muss bei konstanter Geschwindigkeit v des Fächerförderers 17 durch höhere Transportgeschwindigkeiten vₓ der längeren Windeln 10 ausgeglichen werden.

Die Wahl des Produkts und damit der Transportgeschwindigkeiten vₓ kann entweder durch einen Bediener erfolgen, der mittels einer Stellung eines Reglers 39 eine entsprechende Auswahl trifft, oder automatisch durch nicht gezeigte Sensoren, die die Windeln 10 abtasten und erkennen und eine automatische Selektion der Transportgeschwindigkeiten vₓ bewirken.

Sofern erstmalig ein neuer Typ Windel 10 auf der Vorrichtung verarbeitet bzw. gehandhabt wird, für den noch kein Parametersatz in der Datenbank 38 existiert, kann zunächst anhand von Eigenschaften der Windel 10 von der Steuerungseinheit 34 ein Parametersatz generiert werden. Hinsichtlich der Eigenschaften der Windel 10 sind insbesondere Länge, Dicke, Empfindlichkeit, Oberflächenbeschaffenheit und innerer Aufbau interessant, weil sich hieraus Vorgaben für den Parametersatz ergeben können. Um den Parametersatz eines neuen Typs Windel 10 ermitteln zu können, kann die Steuerungseinheit 34 auf die Parametersätze anderer, insbesondere ähnlicher Windeln 10 zurückgreifen und hieraus eine geeigneten Parametersatz ableiten, z.B. durch Interpolation. Der so abgeleitete Parametersatz kann durch automatische und/oder manuelle Korrekturen während und/oder außerhalb des Betriebs der Vorrichtung optimiert werden. Nach Abschluss der Optimierung wird der neue Parametersatz dann in der Datenbank 38 gespeichert.

Eine weitere Besonderheit der Vorrichtung besteht darin, dass mit Hilfe der Steuerungseinheit 34 und den Lichtschranken 37 die Abstände S zwischen den Windeln 10 erfasst werden können und bei Abweichungen eine Korrektur vorgenommen werden kann. Hierzu werden einzelne Zuförderer 13, 14 gezielt und zeitweilig mit einer modifizierten Geschwindigkeit angetrieben bis der Soll-Abstand wieder gegeben ist. Der Erfolg dieses Eingriffs kann durch die Lichtschranken 37 mit Hilfe der Steuerungseinheit 34 überwacht werden.

Eine Lücke, also ein größerer Abstand S zwischen den Windeln 10, entsteht regelmäßig dann, wenn eine fehlerhafte Windel 10 im Bereich der Auswurfstation 18 ausgeschleust wird. Dieses Problem ist in Fig. 3 veranschaulicht. Durch die Ausschleusung einer fehlerhaften Windel 10 entstünde ein Abstand von 2 * S₁. Diese Lücke muss vor der Übergabe der Windeln 10 an den Fächerförderer 17 geschlossen werden, weil sonst die Windelgruppe unvollständig wird.

Diese Lücke könnte gezielt dadurch geschlossen werden, dass der zweite und gegebenenfalls auch noch der dritte und vierte Zuförderer 13, 14 zeitweilig mit einer geringeren Geschwindigkeit angetrieben werden. Vorzugsweise wird aber der erste Zuförderer 13 mit einer höheren Geschwindigkeit angetrieben. Im vorliegenden Fall wird die Lücke dadurch kompensiert, dass die Lücke um den Betrag S₁* verkürzt wird, indem der erste Zuförderer 13 zeitweilig mit einer höheren Geschwindigkeit v₃ angetrieben wird.

Eine weitere Besonderheit besteht darin, dass im letzten Zuförderer 14 (Twistband) zwei Lichtschranken 37 vorgesehen sind. Die Lichtschranken 37 sind mit Abstand zueinander angeordnet, nämlich im Bereich des Beginns des Zuförderers 14 und im Bereich des Endes desselben. Dies ermöglicht eine genauere Erkennung von fehlerhaften Abständen S zwischen den Windeln 10 bzw. von fehlerhaften Positionen der Windeln 10 in Bezug auf die Stellung der Trennstege 22 des Fächerförderers 17. Solche Fehler können insbesondere dann auftreten, wenn größere Lücken im Förderstrom der Windeln 10 auftreten, beispielsweise weil eine größere Zahl an Produkten aufgrund von Fehlern ausgeschleust werden musste und die so entstandene Lücke durch die Zuförderer 13, 14 nicht vollständig ausgleichbar ist. Die so erkannten Fehler hinsichtlich der Positionierung der Windeln 10 im Twistband können durch eine Nachsetzbewegung des Twistbands durch Verschwenken in der Füllstation 25 mit Hilfe des Antriebs 32 ausgeglichen werden.

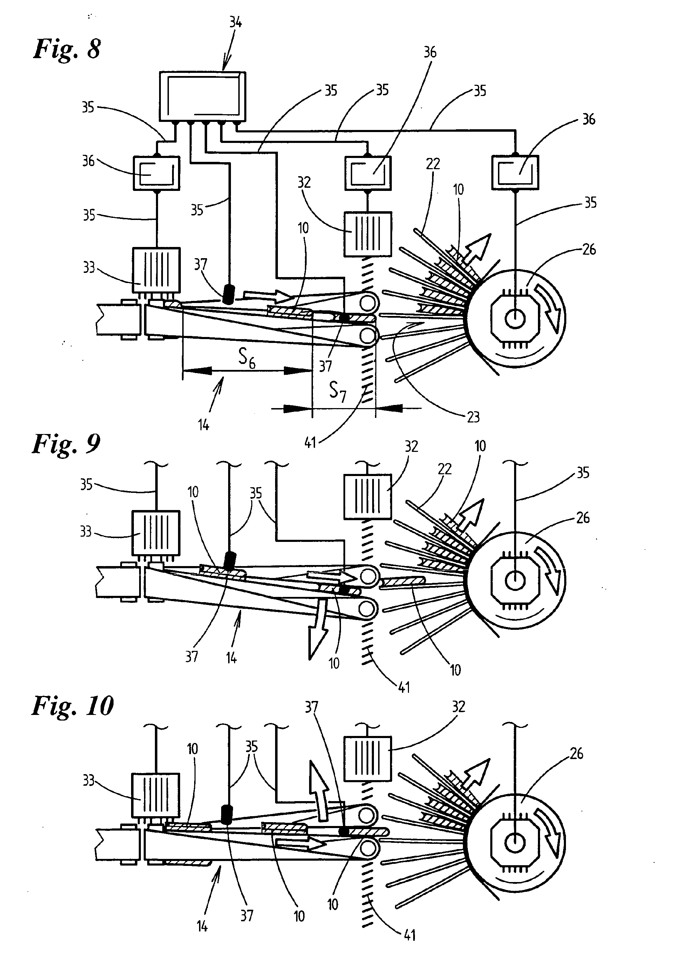

Die Nachsetzbewegung des Twistbands ist zur Verdeutlichung auch in Fig. 8 bis 10 gezeigt. Die Steuerungseinheit 34 ist über Signalleitungen 35 mit den Stromversorgungen 36 der einzelnen Antriebe 32, 33 verbunden, sowie mit einer Lichtschranke 37 im Bereich des Twistbands. Mit Hilfe der Lichtschranke 37 können die Abstände zwischen aufeinanderfolgenden Windeln 10 bestimmt werden.

In Fig. 8 ist der Fall dargestellt, dass der Abstand S₇ zwischen einer ersten und einer zweiten Windel 10 kleiner als der Sollabstand ist und dass der Abstand S₆ zwischen der zweiten und einer darauffolgenden dritten Windel 10 zu groß ist. Ohne Eingriff in die Steuerung des Twistbands führt eine solche Fehlpositionierung der Windeln 10 unweigerlich zu Problemen beim Einfördern derselben in den Fächergurt 21.

Alternativ oder zusätzlich zur bereits beschriebenen Variation der Transportgeschwindigkeit des Twistbands kann mit Hilfe des Antriebs 32 das Ende des Twistbands durch Kopplung mit einer Spindel 41, die durch den Antrieb 32 entsprechend drehbar ist, verstellt werden. Zur Kompensation des zu kurzen Abstands S₇ wird das Ende des Twistbands derart verschwenkt, dass dieses dem zu befüllenden Fach 23 entgegenbewegt wird (Fig. 9). Danach wird das Twistband in die entgegengesetzte Richtung gedreht, um den zu großen Abstand S₆ auszugleichen (Fig. 10). Bei korrekten Abständen zwischen aufeinanderfolgenden Produkten verbleibt das Twistband in der in Fig. 8 gezeigten Stellung.

Mit Hilfe der Nachsetzbewegung des Twistbands können fehlerhafte Abstände zwischen Windeln 10 ebenso korrigiert werden, wie durch angepasste Fördergeschwindigkeiten des Twistbands. Mit Hilfe des Nachsetzens des Twistbands können besonders Abstände korrigiert werden, die nicht durch das komplette Fehlen einer oder mehrerer aufeinanderfolgender Windeln 10 bedingt sind, also eher klein sind. Hierin liegt ein besonderer Vorteil der Nachsetzbewegung.

In Einzelfällen kann es angebracht sein, beide Korrekturmethoden (Nachsetzen Twistband und Änderung der Fördergeschwindigkeit Twistband) gemeinsam einzusetzen, um größere Differenzen auszugleichen.

Wie bereits geschildert hängt die Transportgeschwindigkeit v der Windeln 10 bei der Übergabe an die Fächer 23 des Fächerförderers 13 insbesondere von der Länge der Windeln 10 ab. Bei langen Windeln 10 von beispielsweise 200 mm und einem Durchsatz von 1000 Windeln pro Minute beträgt die Geschwindigkeit v₄ etwa 440 m/min. Sind die Windeln 10 hingegen kurz, also etwa 160 mm lang beträgt die Geschwindigkeit v₂ etwa 320 m/min.

**Bezugszeichenliste**

| | | | |
|---|---|---|---|
| 10 | Windel | 39 | Regler |
| 11 | Faltkante | 40 | Hüllkurve |
| 12 | Gruppiereinrichtung | 41 | Spindel |
| 13 | Zuförderer | | |
| 14 | Zuförderer | S | Abstand |
| 15 | Herstellmaschine | v | Geschwindigkeit |
| 16 | Verpackungsmaschine | | |
| 17 | Fächerförderer | | |
| 18 | Auswurfstation | | |
| 19 | Führungsorgan | | |
| 20 | Auffangbehälter | | |
| 21 | Fächergurt | | |
| 22 | Trennsteg | | |
| 23 | Fach | | |
| 24 | Umlenkung | | |
| 25 | Füllstation | | |
| 26 | Umlenkrolle | | |
| 27 | Förderabschnitt | | |
| 28 | Leerabschnitt | | |
| 29 | Sammelstation | | |
| 30 | Ausschiebeorgan | | |
| 31 | Umlenkwalze | | |
| 32 | Antrieb | | |
| 33 | Antrieb | | |
| 34 | Steuerungseinheit | | |
| 35 | Signalleitung | | |
| 36 | Stromversorgung | | |
| 37 | Lichtschranke | | |
| 38 | Datenbank | | |

## Patentansprüche

1. Verfahren zum Handhaben von flachen Gegenständen, insbesondere von flach zusammengelegten Windeln (10), die durch einen Zuförderer (13, 14) einem Förderer mit Aufnahmen für je einen Gegenstand bzw. für je eine Windel (10) zugeführt werden, insbesondere einem Fächerförderer (17) mit radial abstehend an einem Endlosförderer (21) angeordneten Trennstegen (22) zur Bildung von Fächern (23) für je einen Gegenstand, **dadurch gekennzeichnet, dass** die Geschwindigkeit (v), mit der die Gegenstände auf dem Zuförderer (13, 14) transportiert werden, zur Übergabe der Gegenstände an den Förderer reduziert wird, und wobei die Gegenstände über mehrere hintereinander angeordnete Zuförderer (13, 14) transportiert werden, und wobei die Zuförderer (13, 14) die Gegenstände wenigstens teilweise mit unterschiedlichen Geschwindigkeiten (v) transportieren, derart, dass die Geschwindigkeit (v) der Zuförderer (13, 14) wenigstens teilweise in Richtung des Förderers abnimmt, derart, dass wenigstens der letzte Zuförderer (14) vor der Übergabe der Gegenstände an den Förderer mit einer geringeren Geschwindigkeit (v) als wenigstens einige der davor angeordneten Zuförderer (13) betrieben wird.

2. Verfahren nach Anspruch 1, **dadurch gekennzeichnet, dass** die Gegenstände auf den Zuförderern (13, 14) mit einem Abstand (S) zueinander transportiert werden, wobei die Abstände (S) der aufeinander folgenden Gegenstände im Bereich der Zuförderer (13, 14) mittels Sensoren, insbesondere Lichtschranken (37), erfasst werden und fehlerhafte Abstände (S) gegebenenfalls durch beschleunigten oder verlangsamlen Antrieb eines oder mehrerer Zuförderer (13, 14) ausgeglichen werden.

3. Verfahren nach Anspruch 2. **dadurch gekennzeichnet, dass** die Abstände (S) der aufeinander folgenden Gegenstände in Abhängigkeit von der Produktgröße angepasst werden, insbesondere derart, dass die Abstände (S) der aufeinander folgenden Gegenstände im Bereich des letzten Zuförderers (14) vor der Übergabe an den Förderer verringert wird.

4. Verfahren insbesondere nach Anspruch 1, **dadurch gekennzeichnet, dass** für unterschiedliche Gegenstände und/oder Gegenstände unterschiedlicher Größe jeweils Parameter zur Steuerung der Vorrichtung in einer Steuerungseinheit (34) hinterlegt sind, insbesondere die Geschwindigkeit der Zuförderer (13, 14) und/oder die Verteilung der Transportgeschwindigkeit (v) auf den Zuförderern (13, 14) und/oder die maximal zulässigen Beschleunigungswerte der Gegenstände und/oder Geschwindigkeitsdifferenzen zwischen den Zuförderern (13, 14) und/oder der Abstand (S), wobei die Steuerungseinheit (34) den Transport der Gegenstände auf den Zuförderern (13, 14) nach Maßgabe der hinterlegten Parameter steuert.

5. Verfahren nach Anspruch 1, **dadurch gekennzeichnet, dass** die Transportgeschwindigkeit (v) der Gegenstände auf vorzugsweise wenigstens dem letzten Zuförderer (14) vor der Übergabe der Gegenstände an den Fächerförderer (17) in Abhängigkeit von der Produktgröße, insbesondere der Länge des Gegenstandes in Transportrichtung, den Abmessungen eines Faches (23) zwischen benachbarten Trennstegen (22) des Fächerförderers (17) und der Fördergeschwindigkeit des Fächerförderers (17) geregelt wird, derart, dass größere Gegenstände mit einer höheren Transportgeschwindigkeit (v) und kleinere Gegenstände mit einer geringeren Transportgeschwindigkeit (v) transportiert werden.

6. Verfahren nach Anspruch 5, **dadurch gekennzeichnet, dass** der Abstand (S) zwischen zwei aufeinanderfolgenden Gegenständen derart gesteuert wird, dass der Abstand (S) gerade ausreichend ist, damit ein Trennsteg (22) nach der Einschleusung eines Gegenstands und vor Einschleusung des nächsten Gegenstands zwischen den beiden Gegenständen hindurchbewegt wird.

7. Verfahren nach Anspruch 5 oder 6, **dadurch gekennzeichnet, dass** die Einschleusung eines Gegenstands in ein Fach (23) des Fächerförderers (17) beginnt, sobald ein vorauslaufendes Ende des Gegenstands eine gedachten virtuellen Hüllkurve (40) berührt, die durch freie Ende der Trennstege (22) des Fächerförderers (17) im Bereich der Füllstation (25) beschrieben wird und dass das Einschleusen des Gegenstands in das Fach (23) des Fächerförderers (17) endet, sobald ein stromabwärtiges Ende des Gegenstands die gedachte virtuelle Hüllkurve (40) durchlaufen hat.

8. Verfahren nach Anspruch 1, **dadurch gekennzeichnet, dass** die Geschwindigkeitsdifferenz zwischen benachbarten Zuförderern (13, 14) derart gewählt wird, dass die Gegenstände bei der Übergabe zwischen den Zuförderern (13, 14) nicht beschädigt werden, wobei die Geschwindigkeitsdifferenz zwischen benachbarten Zuförderern (13, 14) umso größer ist je kleiner die Gegenstände sind und umso kleiner ist je größer die Gegenstände sind und dass die Gegenstände insbesondere vom Zuförderer (13, 14) an den Förderer übergeben werden, der die Gegenstände antiparallel, insbesondere quer, zur Transportrichtung auf dem letzten Zuförderer (14) abtransportiert, und dass der Förderer die Gegenstände mit konstanter Geschwindigkeit (v) kontinuierlich abtransportiert.

9. Verfahren nach Anspruch 1, **dadurch gekennzeichnet, dass** der letzte Zuförderer (14) vor der Übergabe der Gegenstände an den Förderer verschwenkt wird zum Ausgleich von unregelmäßigen Abständen (S) zwischen aufeinanderfolgenden Gegenständen, insbesondere derart, dass bei zu geringen Abständen (S) zwischen aufeinanderfolgenden Gegenständen der Zuförderer (14) dem zu befüllenden Fach (23) des Fächerförderers (17) entgegen bewegt wird und dass bei zu großen Abständen (S) zwischen aufeinanderfolgenden Gegenständen der Zuförderer (14) dem zu befüllenden Fach (24) des Fächerförderers (17) hinterher bewegt wird, wobei dies jeweils nach Maßgabe der detektierten Abstände (S) zwischen aufeinander folgenden Gegenständen erfolgt.

10. Vorrichtung zum Handhaben von flachen Gegenständen, insbesondere von flach zusammengelegten Windeln (10), die durch einen Zuförderer (13, 14) einem Förderer mit Aufnahmen für je einen Gegenstand bzw. für je eine Windel (10) zuführbar sind, insbesondere einem Fächerförderer (17) mit radial abstehend an einem Endlosförderer (21) angeordneten Trennstegen (22) zur Bildung von Fächern (23) für je einen Gegenstand, **dadurch gekennzeichnet, dass** die Geschwindigkeit (v), mit der die Gegenstände auf dem Zuförderer (13, 14) transportiert werden, zur Übergabe der Gegenstände an den Förderer reduzierbar ist, und dass mehrere Zuförderer (13, 14) hintereinander angeordnet sind, wobei jeder Zuförderer (13, 14) mit einem Antrieb (33) antreibbar ist und die Antriebe (33) derart durch eine Steuerungseinheit (34) geregelt sind, dass die Geschwindigkeit der Zuförderer (13, 14) wenigstens teilweise in Richtung des Förderers abnimmt.

11. Vorrichtung nach Anspruch 10, **dadurch gekennzeichnet, dass** jeder Zuförderer (13, 14) durch einen vorzugsweise separaten Antrieb (33) antreibbar ist, wobei mittels einer Steuerungseinheit (34) die Antriebe (33) vorzugsweise individuell regelbar sind, derart, dass die Geschwindigkeit wenigstens des letzten Zuförderers (14) vor der Übergabe der Gegenstände an den Förderer geringer ist als die Geschwindigkeit der vorgeordneten Zuförderer (13).

12. Vorrichtung nach Anspruch 11, **dadurch gekennzeichnet, dass** die Gegenstände mit einem Abstand (S) auf den Zuförderern (13, 14) transportierbar sind, wobei die Abstände (S) aufeinander folgender Gegenstände mittels Sensoren im Bereich der Transportstrecke erfassbar sind und Abweichungen der Abstände von einem Soll-Abstand durch Eingriff in die Steuerung der Antriebe (33) ausgleichbar sind.

13. Vorrichtung nach Anspruch 12. **dadurch gekennzeichnet, dass** jedem Zuförderer (13, 14) eine Lichtschranke (37) als Sensor zugeordnet ist, insbesondere derart, dass der letzte Zuförderer (14) vor der Übergabe der Gegenstände an den Förderer mehrere, insbesondere zwei, Lichtschranken (37) aufweist zur Erfassung der Abstände (S) der Gegenstände in diesem Bereich.

## Claims

1. A method for handling flat objects, in particular flat folded diapers (10), which are fed to a conveyor with receptacles for each object or for each diaper (10) by way of a feeder (13, 14), in particular to a compartment conveyor (17) comprising separation struts (22) which are arranged so as to protrude radially from a continuous conveyor (21) in order to form compartments (23) for each object, **characterized in that** the speed (v) at which the objects are transported on the feeder (13, 14) is reduced for handover of the objects to the conveyor, and wherein the objects are transported via a plurality of feeders (13, 14) arranged one after another, and wherein the feeders (13, 14) transporting the objects, at least in part, at different speeds (v) in such a way that the speed (v) of the feeders (13, 14) decreases, at least in part, in the direction of the conveyor, in such a way that at least the last feeder (14) before the handover of the objects to the conveyor is operated at a lower speed (v) than at least some of the feeders (13) arranged therebefore.

2. The method as claimed in claim 1, **characterized in that** the objects are transported on the feeders (13, 14) at a spacing (S) from one another, the spacings (S) of the successive objects being detected in the region of the feeders (13, 14) by means of sensors, in particular light barriers (37), and defective spacings (S) being if appropriate compensated for by way of accelerated or decelerated driving of one or more feeders (13, 14).

3. The method as claimed in claim 2, **characterized in that** the spacings (S) of the successive objects are adapted as a function of the product size, in particular in such a way that the spacings (S) of the successive objects are reduced in the region of the last feeder (14) before the handover to the conveyor.

4. The method, in particular as claimed in claim 1, **characterized in that** there are filed, for different objects and/or objects of different size, in each case parameters for controlling the device in a control unit (34), in particular the speed of the feeders (13, 14) and/or the distribution of the transport speed (v) on the feeders (13, 14) and/or the maximum admissible acceleration values of the objects and/or speed differentials between the feeders (13, 14) and/or the spacing (S), with the control unit (34) controlling the transportation of the objects on the feeders (13, 14) in accordance with the filed parameters.

5. The method as claimed in claim 1, **characterized in that** the transport speed (v) of the objects on preferably at least the last feeder (14) before the handover of the objects to the compartment conveyor (17) is regulated as a function of the product size, in particular the length of the object in the direction of transportation, the dimensions of a compartment (23) between adjacent separation struts (22) of the compartment conveyor (17) and the conveyance speed of the compartment conveyor (17), in such a way that larger objects having a higher transport speed (v) and smaller objects having a lower transport speed (v) are transported.

6. The method as claimed in claim 5, **characterized in that** the spacing (S) between two successive objects is controlled in such a way that the spacing (S) is just sufficient for a separation strut (22) to be moved through, after the introduction of one object and before the introduction of the next object, between the two objects.

7. The method as claimed in claim 5 or 6, **characterized in that** the introduction of an object into a compartment (23) of the compartment conveyor (17) begins as soon as a leading end of the object touches a notional virtual envelope curve (40) which is described by free ends of the separation struts (22) of the compartment conveyor (17) in the region of the filling station (25) and **in that** the introduction of the object into the compartment (23) of the compartment conveyor (17) ends as soon as a downstream end of the object has passed through the notional virtual envelope curve (40).

8. The method as claimed in claim 1, **characterized in that** the speed differential between adjacent feeders (13, 14) is selected in such a way that the objects are not damaged during the handover between the feeders (13, 14), wherein the smaller the objects are, the higher is the speed differential between adjacent feeders (13, 14) and the larger the objects are, the lower is the speed differential, and **in that** the objects are handed over, in particular, from the feeder (13, 14) to the conveyor which discharges the objects in an antiparallel manner, in particular transversely, to the direction of transportation on the last feeder (14), and **in that** the feeder continuously discharges the objects at constant speed (v).

9. The method as claimed in claim 1, **characterized in that** the last feeder (14) before the handover of the objects to the conveyor is pivoted to compensate for nonuniform spacings (S) between successive objects, in particular in such a way that, in the event of excessively small spacings (S) between successive objects, the feeder (14) is moved counter to the compartment (23) to be filled of the compartment conveyor (17) and that, in the event of excessively large spacings (S) between successive objects, the feeder (14) is moved so as to follow the compartment (24) to be filled of the compartment conveyor (17), this being carried out in each case in accordance with the detected spacings (S) between successive objects.

10. A device for handling flat objects, in particular flat folded diapers (10), which can be fed to a conveyor with receptacles for each object or for each diaper (10) by way of a feeder (13, 14), in particular to a compartment conveyor (17) comprising separation struts (22) which are arranged so as to protrude radially from a continuous conveyor (21) in order to form compartments (23) for each object, **characterized in that** the speed (v) at which the objects are transported on the feeder (13, 14) can be reduced for handover of the objects to the conveyor and **in that** a plurality of feeders (13, 14) are arranged one after another, wherein each feeder (13, 14) can be driven using a drive (33) and the drives (33) are regulated by a control unit (34) in such a way that the speed of the feeders (13, 14) decreases, at least in part, in the direction of the conveyor.

11. The device as claimed in claim 10, **characterized in that** each feeder (13, 14) can be driven by a preferably separate drive (33), wherein the drives (33) can be regulated, preferably individually, by means of a control unit (34) in such a way that the speed of at least the last feeder (14) before the handover of the objects to the conveyor is lower than the speed of the preceding feeders (13).

12. The device as claimed in claim 11, **characterized in that** the objects can be transported at a spacing (S) on the feeders (13, 14), wherein the spacings (S) of successive objects can be detected by means of sensors in the region of the transport path and deviations of the spacings from a desired spacing can be compensated for by intervening in the control of the drives (33).

13. The device as claimed in claim 12, **characterized in that** a light barrier (37) is associated with each feeder (13, 14) as a sensor, in particular in such a way that the last feeder (14) before the handover of the objects to the conveyor has a plurality of, in particular two, light barriers (37) for detecting the spacings (S) of the objects in this region.

## Revendications

1. Procédé pour la manipulation d'objets plats, en particulier de couches (10) pliées à plat, qui sont acheminés, au moyen d'un convoyeur d'alimentation (13, 14), à un transporteur pourvu de logements pour chaque objet ou pour chaque couche (10), en particulier à un transporteur à compartiments (17) présentant des nervures de séparation (22) disposées sur un transporteur sans fin (21) de manière saillante radialement pour former des compartiments (23) pour chaque objet, **caractérisé en ce que** la vitesse (v) à laquelle les objets sont transportés sur le convoyeur d'alimentation (13, 14) est réduite en vue du transfert des objets au transporteur, et les objets étant transportés par le biais de plusieurs convoyeurs d'alimentation (13, 14) disposés les uns derrière les autres, et les convoyeurs d'alimentation (13, 14) transportant les objets au moins partiellement à des vitesses différentes (v), de telle sorte que la vitesse (v) des convoyeurs d'alimentation (13, 14) diminue au moins partiellement dans la direction du transporteur, de telle sorte qu'au moins le dernier convoyeur d'alimentation (14) avant le transfert des objets au transporteur fonctionne à une plus faible vitesse (v) qu'au moins certains des convoyeurs d'alimentation (13) disposés avant celui-ci.

2. Procédé selon la revendication 1, **caractérisé en ce que** les objets sur les convoyeurs d'alimentation (13, 14) sont transportés à une distance (S) les uns des autres, les distances (S) entre les objets successifs dans la région des convoyeurs d'alimentation (13, 14) étant détectées au moyen de capteurs, en particulier de barrières lumineuses (37), et des distances incorrectes (S) étant éventuellement compensées par un entraînement accéléré ou ralenti d'un ou de plusieurs convoyeurs d'alimentation (13, 14).

3. Procédé selon la revendication 2, **caractérisé en ce que** les distances (S) entre les objets successifs sont adaptées en fonction de la taille du produit, en particulier de telle sorte que les distances (S) entre les objets successifs soient réduites dans la région du dernier convoyeur d'alimentation (14) avant le transfert au transporteur.

4. Procédé en particulier selon la revendication 1, **caractérisé en ce que**, pour des objets différents et/ou des objets de tailles différentes, des paramètres respectifs sont mis en mémoire dans une unité de commande (34) en vue de la commande du dispositif, en particulier la vitesse des convoyeurs d'alimentation (13, 14) et/ou la répartition de la vitesse de transport (v) sur les convoyeurs d'alimentation (13, 14) et/ou les valeurs d'accélération maximales admissibles des objets et/ou les différences de vitesses entre les convoyeurs d'alimentation (13, 14) et/ou la distance (S), l'unité de commande (34) commandant le transport des objets sur les convoyeurs d'alimentation (13, 14) conformément aux paramètres mis en mémoire.

5. Procédé selon la revendication 1, **caractérisé en ce que** la vitesse de transport (v) des objets sur de préférence au moins le dernier convoyeur d'alimentation (14) avant le transfert des objets au transporteur à compartiments (17) est réglée en fonction de la taille du produit, en particulier de la longueur de l'objet dans la direction de transport, des dimensions d'un compartiment (23) entre des nervures de séparation adjacentes (22) du transporteur à compartiments (17) et de la vitesse de transporteur du transporteur à compartiments (17), de telle sorte que des objets plus grands soient transportés à une vitesse de transport (v) plus élevée et que des objets plus petits soient transportés à une vitesse de transport (v) plus faible.

6. Procédé selon la revendication 5, **caractérisé en ce que** la distance (S) entre deux objets successifs est commandée de telle sorte que la distance (S) soit juste suffisante pour qu'une nervure de séparation (22) soit, après l'introduction d'un objet et avant l'introduction de l'objet suivant, déplacée entre et à travers les deux objets.

7. Procédé selon la revendication 5 ou 6, **caractérisé en ce que** l'introduction d'un objet dans un compartiment (23) du transporteur à compartiments (17) commence dès qu'une extrémité avant de l'objet vient en contact avec une courbe d'enveloppe (40) virtuelle imaginaire qui est définie par l'extrémité libre des nervures de séparation (22) du transporteur à compartiments (17) dans la région du poste de remplissage (25), et **en ce que** l'introduction de l'objet dans le compartiment (23) du transporteur à compartiments (17) se termine dès qu'une extrémité aval de l'objet à traversé la courbe d'enveloppe (40) virtuelle imaginaire.

8. Procédé selon la revendication 1, **caractérisé en ce que** la différence de vitesses entre des convoyeurs d'alimentation adjacents (13, 14) est sélectionnée de telle sorte que les objets ne soient pas endommagés lors du transfert entre les convoyeurs d'alimentation (13, 14), la différence de vitesses entre des convoyeurs d'alimentation adjacents (13, 14) étant d'autant plus élevée que les objets sont petits et d'autant plus faible que les objets sont grands, et **en ce que** les objets sont en particulier transférés du convoyeur d'alimentation (13, 14) au transporteur qui évacue les objets sur le dernier convoyeur d'alimentation (14) de manière antiparallèle, en particulier transversalement, à la direction de transport, et **en ce que** le transporteur évacue en continu les objets à une vitesse constante (v).

9. Procédé selon la revendication 1, **caractérisé en ce que** le dernier convoyeur d'alimentation (14) avant le transfert des objets au transporteur est pivoté pour compenser des distances irrégulières (S) entre des objets successifs, en particulier de telle sorte qu'en cas de distances (S) trop faibles entre des objets successifs, le convoyeur d'alimentation (14) soit déplacé vers le compartiment (23) à remplir du transporteur à compartiments (17) et de telle sorte qu'en cas de distances (S) trop grandes entre des objets successifs, le convoyeur d'alimentation (14) soit déplacé derrière le compartiment (24) à remplir du transporteur à compartiments (17), ceci s'effectuant respectivement conformément aux distances (S) détectées entre des objets successifs.

10. Dispositif pour la manipulation d'objets plats, en particulier de couches (10) pliées à plat, qui peuvent être acheminés, au moyen d'un convoyeur d'alimentation (13, 14), à un transporteur pourvu de logements pour chaque objet ou pour chaque couche (10), en particulier à un transporteur à compartiments (17) présentant des nervures de séparation (22) disposées sur un transporteur sans fin (21) de manière saillante radialement pour former des compartiments (23) pour chaque objet, **caractérisé en ce que** la vitesse (v) à laquelle les objets sont transportés sur le convoyeur d'alimentation (13, 14) peut être réduite en vue du transfert des objets au transporteur, et **en ce que** plusieurs convoyeurs d'alimentation (13, 14) sont disposés les uns derrière les autres, chaque convoyeur d'alimentation (13, 14) pouvant être entraîné par un entraînement (33) et les entraînements (33) étant réglés au moyen d'une unité de commande (34), de telle sorte que la vitesse des convoyeurs d'alimentation (13, 14) diminue au moins partiellement dans la direction du transporteur.

11. Dispositif selon la revendication 10, **caractérisé en ce que** chaque convoyeur d'alimentation (13, 14) peut être entraîné au moyen d'un entraînement (33) de préférence séparé, les entraînements (33) pouvant de préférence être réglés individuellement au moyen d'une unité de commande (34), de telle sorte que la vitesse au moins du dernier convoyeur d'alimentation (14) avant le transfert des objets au transporteur soit inférieure à la vitesse des convoyeurs d'alimentation (13) placés en amont.

12. Dispositif selon la revendication 11, **caractérisé en ce que** les objets peuvent être transportés à une distance (S) sur les convoyeurs d'alimentation (13, 14), les distances (S) entre des objets successifs pouvant être détectées au moyen de capteurs dans la région de la voie de transport et des écarts des distances par rapport à une distance de consigne pouvant être compensés par intervention dans la commande des entraînements (33).

13. Dispositif selon la revendication 12, **caractérisé en ce qu'**une barrière lumineuse (37) faisant office de capteur est associée à chaque convoyeur d'alimentation (13, 14), en particulier de telle sorte que le dernier convoyeur d'alimentation (14) avant le transfert des objets au transporteur comprenne plusieurs, en particulier deux, barrières lumineuses (37) pour la détection des distances (S) entre les objets dans cette région.
